(19) Europäisches Patentamt
European Patent Office
Office européen des brevets

(11) **EP 4 685 863 A1**

(12) **EUROPEAN PATENT APPLICATION**
published in accordance with Art. 153(4) EPC

(43) Date of publication:
**28.01.2026 Bulletin 2026/05**

(21) Application number: **24784647.0**

(22) Date of filing: **01.03.2024**

(51) International Patent Classification (IPC):
*H01M 4/134* (2010.01)    *H01M 4/38* (2006.01)
*H01M 10/052* (2010.01)    *H01M 10/058* (2010.01)

(52) Cooperative Patent Classification (CPC):
Y02E 60/10

(86) International application number:
**PCT/JP2024/007824**

(87) International publication number:
**WO 2024/209852 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.04.2023 JP 2023061578**

(71) Applicant: **TDK Corporation
Tokyo 103-6128 (JP)**

(72) Inventors:
• **TANIKI, Ryousuke
Tokyo 103-6128 (JP)**
• **KAKUTA, Hirofumi
Tokyo 103-6128 (JP)**

(74) Representative: **Epping - Hermann - Fischer
Patentanwaltsgesellschaft mbH
Schloßschmidstraße 5
80639 München (DE)**

(54) **LITHIUM SECONDARY BATTERY AND METHOD FOR PRODUCING SAME**

(57)    A lithium secondary battery according to an embodiment is a lithium secondary battery including a negative electrode and a positive electrode, in which the negative electrode has: in the following order, a current collector layer; a first lithium metal layer made of a lithium metal foil; a second lithium metal layer including granular lithium metal; and a third lithium metal layer including lithium metal and being porous, the granular lithium metal having an average particle diameter larger than an average pore diameter of the third lithium metal layer.

*Fig.2*

## Description

### Technical Field

The present disclosure relates to a lithium secondary battery and a method for producing the same.

### Background Art

Since a lithium battery can realize a high capacity as compared with a conventional nickel-metal hydride battery or a lead-acid battery, attention and introduction have been advanced also as a power source for mobile phones and notebook computers, and as a power source for large power storage and a power source for automobiles. However, due to high functionality of various electronic apparatuses and an increase in demand for a power supply, a further increase in capacity of a lithium battery is expected. Unlike a lithium ion secondary battery that performs charging and discharging by inserting and removing lithium ions into and from a material constituting an electrode, a lithium secondary battery performs charging and discharging by depositing and dissolving lithium metal. Since it is a light metal, it has a capacity several times to ten times that of graphite, and has an extremely low potential, so that it is highly expected. (Patent Literatures 1 to 3)

### Citation List

### Patent Literature

Patent Literature 1: Japanese Unexamined Patent Publication No. H11-214008
Patent Literature 2: Japanese Unexamined Patent Publication No. 2000-133314
Patent Literature 3: Japanese Patent No. 5317435

### Summary of the Invention

### Technical Problem

As a problem that occurs in a case where lithium metal is used as a negative electrode active material, there is a problem that lithium metal nuclei are non-uniformly generated and grown on a surface of a negative electrode during charging. When the lithium metal is non-uniformly deposited, a tip of the deposited lithium metal can come into contact with an electrolytic solution. Therefore, lithium deposits easier than at other places, and a dendritic lithium metal is deposited in a form in which the tip of the deposited lithium metal further stretches (dendrite). As dendrite formation proceeds, a specific surface area increases, so that reductive decomposition products increases.

Furthermore, in a discharge process, when the lithium metal is dissolved, a part of the deposited lithium metal on the dendrite is peeled off, a portion (dead lithium) that cannot contribute to discharge is generated, and pulverization of the lithium metal proceeds.

Since the deposition of the reductive decomposition product and the pulverization of the lithium metal proceed as the cycle is repeated, the negative electrode greatly expands. The expansion of the negative electrode is a major problem because of promoting depletion of the electrolytic solution, reducing safety, and deteriorating cycle characteristics.

The present disclosure has been made in view of the above problems, and provides a lithium secondary battery excellent in charge-discharge cycle characteristics and a method for producing the same.

### Solution to Problem

[1] A lithium secondary battery including:

a negative electrode; and a positive electrode,
in which the negative electrode has: in the following order,
a current collector layer;
a first lithium metal layer made of a lithium metal foil;
a second lithium metal layer including granular lithium metal; and
a third lithium metal layer including lithium metal and being porous,

the granular lithium metal having an average particle diameter larger than an average pore diameter of the third lithium metal layer.

[2] The lithium secondary battery according to [1], in which the third lithium metal layer has a porosity of 10 to 40%.

[3] The lithium secondary battery according to [1] or [2], in which the third lithium metal layer has an average pore diameter of 0.1 to 3 $\mu$m.

[4] The lithium secondary battery according to any one of [1] to [3], in which the granular lithium metal has an average particle diameter of 1 to 22 $\mu$m.

[5] The lithium secondary battery according to any one of [1] to [4], in which an area percentage S obtained by the following Formula (1) is 60 area% or more.

Area percentage

$$S = \{S3/(S2 + S3)\} \times 100 \cdots \text{Formula (1)}$$

[In Formula (1), S2 is an area of the second lithium metal layer on a principal surface of the negative electrode on a third lithium metal layer side, and S3 is an area of the third lithium metal layer on the principal surface of the negative electrode on the third lithium metal layer side.]

[6] A method for producing a lithium secondary battery, including:

(a) a step of preparing a lithium secondary battery precursor including a negative electrode having a current collector layer and a lithium metal foil, and a positive electrode; and

(b) charging the lithium secondary battery precursor at 0.01 to 0.5C until a state of charge reaches 10 to 100%, and then discharging the lithium secondary battery precursor at 0.2C to 2.5C, wherein

the step (b) is performed twice or more.

**Advantageous Effects of the Invention**

According to the present disclosure, there are provided a lithium secondary battery excellent in charge-discharge cycle characteristics and a method for producing the same.

**Brief Description of Drawings**

FIG. 1 is a schematic cross-sectional view illustrating a lithium secondary battery according to an embodiment.

FIG. 2 is a cross-sectional view of a negative electrode 30C according to an embodiment.

FIG. 3(a) is an SEM photograph obtained by photographing a part of a cross section of a negative electrode of a lithium secondary battery obtained in Example. FIG. 3(b) is an SEM photograph obtained by photographing a principal surface of the negative electrode of the lithium secondary battery on a third lithium metal layer side obtained in Example. FIG. 3(c) is an SEM photograph obtained by photographing the principal surface of the negative electrode of the lithium secondary battery on the third lithium metal layer side obtained in Example.

**Description of Embodiment**

A preferred embodiment of the present disclosure will be described with reference to the drawings.

[Lithium Secondary Battery]

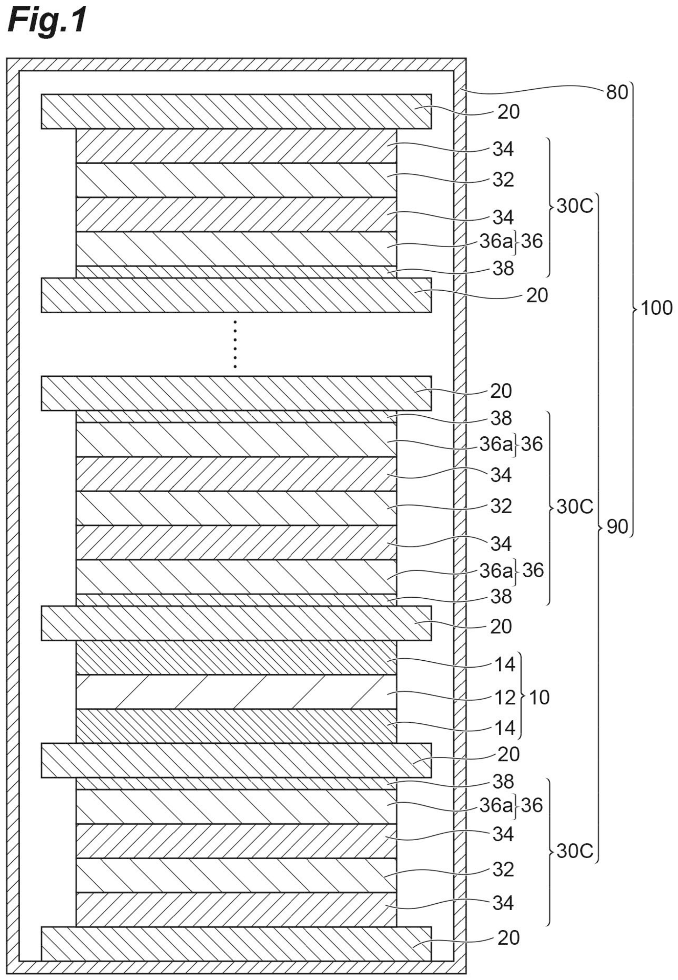

As illustrated in FIG. 1, a lithium secondary battery 100 according to the present embodiment includes a power generating element 90 and a case 80. The power generating element 90 is a laminate having a large number of negative electrodes 30C, positive electrodes 10, and separators 20. In the power generating element 90, the negative electrode 30C and the positive electrode 10 are alternately disposed, and the separator 20 is disposed between the negative electrode 30C and the positive electrode 10. Each layer of the power generating element 90 is impregnated with a nonaqueous electrolytic solution.

(Negative Electrode 30C)

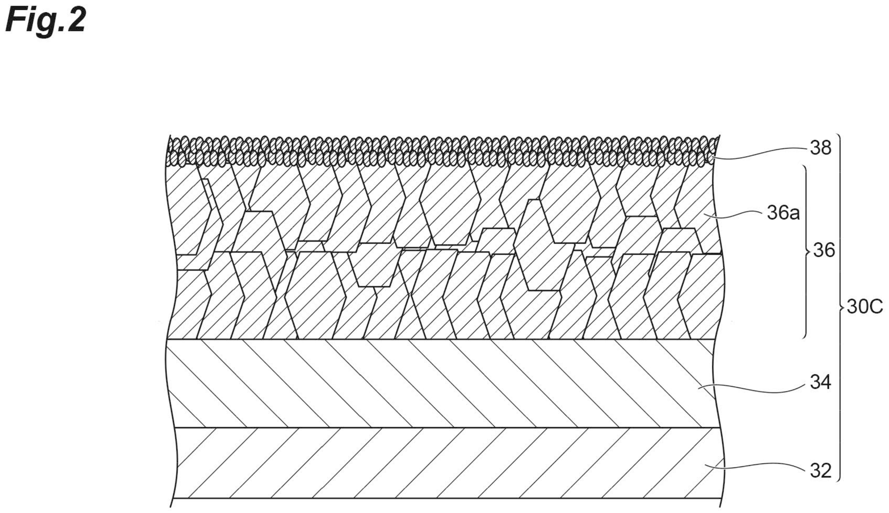

FIG. 2 is a cross-sectional view of the negative electrode 30C according to an embodiment. The negative electrode 30C includes, in the following order, a current collector layer 32, a first lithium metal layer 34 made of a lithium metal foil, a second lithium metal layer 36 including granular lithium metal 36a, and a third lithium metal layer 38 including lithium metal and being porous. The negative electrode 30C may include the first to third lithium metal layers on each of a pair of principal surfaces of the current collector layer 32, or may include the first to third lithium metal layers only on one principal surface of the current collector layer 32. The negative electrode 30C may include the first to third lithium metal layers on one principal surface of the current collector layer 32, and may include only the first lithium metal layer on the other principal surface of the current collector layer 32.

The current collector layer 32 only needs to be a conductive plate material, and for example, a metal thin plate (metal foil) of copper, nickel, stainless steel, or an alloy thereof can be used. A copper foil is preferable from a viewpoint of conductivity. The copper foil may be a rolled copper foil or another copper foil. A thickness of the current collector layer 32 is not limited, and may be, for example, from 2 $\mu$m to 20 $\mu$m.

Although a thickness of the first lithium metal layer 34 is not particularly limited, it can be 2 $\mu$m or more and 50 $\mu$m or less.

The porosity of the first lithium metal layer 34 may be 1% or less, and it may be free of voids.

The second lithium metal layer 36 includes the granular lithium metal 36a. The second lithium metal layer 36 may be an aggregate of granular lithium metals 36a. A part of the adjacent granular lithium metals 36a may be bonded. The granular lithium metal 36a may be a single crystal.

An average particle diameter of the granular lithium metal 36a is larger than an average pore diameter of the third lithium metal layer 38 to be described later. The average particle diameter of the granular lithium metal 36a may be 1 to 22 $\mu$m. The average particle diameter is measured by a method described in Example to be described later.

The porosity of the second lithium metal layer 36 may be 3 to 40%. The porosity is measured by observing a cross-section prepared using a scanning electron microscope (SEM) and measuring the pore (void) area.

A thickness of the second lithium metal layer 36 may be 1 to 25 $\mu$m.

The third lithium metal layer 38 includes lithium metal and is porous. The third lithium metal layer 38 does not include granular lithium metal included in the second lithium metal layer 36.

A porosity of the third lithium metal layer 38 is preferably 10 to 40%, and more preferably 15 to 30%. When the porosity is 10% or more, lithium ions easily pass. When the porosity is 40% or less, deposition of dendrite tends to be suppressed. Therefore, the lithium secondary battery having the porosity in the above range tends to be further excellent in cycle characteristics. The porosity is measured by the method described in Example to be described later.

The average pore diameter of the third lithium metal layer 38 is preferably 0.1 to 3 $\mu$m, and more preferably 0.5 to 1 $\mu$m because charge-discharge cycle characteristics tend to be further improved. When the average pore diameter is 0.1 $\mu$m or more, lithium ions easily pass through. When the average pore diameter is 3 $\mu$m or less, deposition of dendrite tends to be suppressed. Therefore, a lithium secondary battery having an average pore diameter in the above range tends to be further excellent in the cycle characteristics. The average pore diameter is measured by the method described in Example to be described later.

A content of lithium metal in the third lithium metal layer 38 may be 80 mass% or more, 95 mass% or more, 99 mass% or more, or 100 mass%.

A thickness of the third lithium metal layer 38 may be 2 to 50 $\mu$m.

An area percentage S of the negative electrode 30C, which is obtained by the following Formula (1), is preferably 60 area% or more, more preferably 70 area% or more, and still more preferably 80 area% or more because the charge-discharge cycle characteristics tend to be further improved. The area percentage S is measured by the method described in Examples to be described later.

$$\text{Area percentage S} = \{S3/(S2 + S3)\} \times 100 \cdots \text{Formula (1)}$$

[In Formula (1), S2 is an area of the second lithium metal layer on a principal surface of the negative electrode of the lithium secondary battery on a third lithium metal layer side, and S3 is an area of the third lithium metal layer on the principal surface of the negative electrode of the lithium secondary battery on the third lithium metal layer side.]

An entire thickness of the negative electrode 30C can be 1 to 150 $\mu$m.

The negative electrode 30C may have a main body part and a tab part protruding from the main body part.

A planar shape of the negative electrode 30C can take various shapes according to a final shape of the battery. For example, the negative electrode 30C need not have the tab part. In addition, a shape of the main body part may also be circular or the like.

(Mechanism of Action)

The lithium secondary battery 100 has the second lithium metal layer 36 and the third lithium metal layer, and the average particle diameter of the granular lithium metal 36a is larger than the average pore diameter of the third lithium metal layer 38. As a result, the third lithium metal layer suppresses nonuniform generation and growth of lithium metal nuclei on a surface of the second lithium metal layer 36. As a result, in the lithium secondary battery 100, expansion of the negative electrode is suppressed to have excellent cycle characteristics.

(Positive Electrode 10)

The positive electrode 10 has a positive electrode current collector 12 and positive electrode active material layers 14 provided on the opposite surfaces of the positive electrode current collector 12.
The positive electrode current collector 12 only needs to be a conductive plate material, and can be, for example, a metal foil such as aluminum, copper, or nickel.
The positive electrode active material layer 14 includes a positive electrode active material, a conductive auxiliary agent, and a binder.
The positive electrode active material includes an active material enabling occlusion and release of lithium ions, removal and insertion (intercalation) of lithium ions, or doping and dedoping of lithium ions and counter anions to reversibly proceed.
The positive electrode active material is, for example, a composite metal oxide. Examples of the composite metal oxide include lithium cobaltate ($LiCoO_2$), lithium nickelate ($LiNiO_2$), lithium manganate ($LiMnO_2$), lithium manganese spinel ($LiMn_2O_4$), a compound represented by a general formula: $LiNi_xCo_yMn_zM_aO_2$ ($x + y + z + a = 1$, $0 \leq x < 1$, $0 \leq y < 1$, $0 \leq z < 1$, $0 \leq a < 1$, and M is one or more elements selected from Al, Mg, Nb, Ti, Cu, Zn, and Cr), a lithium vanadium compound ($LiV_2O_5$), an olivine type $LiMPO_4$ (where M represents one or more elements selected from Co, Ni, Mn, Fe, Mg, Nb, Ti, Al, and Zr, or VO), lithium titanate ($Li_4Ti_5O_{12}$), and $LiNi_xCo_yAl_zO_2$ ($0.9 < x + y + z < 1.1$). The positive electrode active material may be an organic substance. Examples of the positive electrode active material of the organic substance include polyacetylene, polyaniline, polypyrrole, polythiophene, and polyacene.
The conductive auxiliary agent enhances electron conductivity between the positive electrode active materials. Examples of the conductive auxiliary agent include carbon powders such as carbon black, acetylene black, and Ketjen black, carbon nanotubes, a carbon material, metal fine powders such as copper, nickel, stainless steel, and iron, a mixture of a carbon material and a metal fine powder, and a conductive oxide such as ITO. The conductive auxiliary agent is preferably a carbon material such as carbon black, acetylene black, or Ketjen black.
The binder bonds the active materials to each other. As the binder, a known binder can be used. An example of the binder is a fluororesin. Examples of the fluororesin include polyvinylidene fluoride (PVDF), polytetrafluoroethylene (PTFE), a tetrafluoroethylene-hexafluoropropylene copolymer (FEP), a tetrafluoroethylene-perfluoroalkyl vinyl ether copolymer (PFA), an ethylene-tetrafluoroethylene copolymer (ETFE), polychlorotrifluoroethylene (PCTFE), an ethylene-chlorotrifluoroethylene copolymer (ECTFE), and polyvinyl fluoride (PVF).
Other examples of the binder are vinylidene fluoride-based fluorine rubbers such as vinylidene fluoride-hexafluoropropylene-based fluorine rubber (VDF-HFP-based fluorine rubber), vinylidene fluoride-hexafluoropropylene-tetrafluoroethylene-based fluorine rubber (VDF-HFP-TFE-based fluorine rubber), vinylidene fluoride-pentafluoropropylene-based fluorine rubber (VDF-PFP-based fluorine rubber), vinylidene fluoride-pentafluoropropylene-tetrafluoroethylene-based fluorine rubber (VDF-PFP-TFE-based fluorine rubber), vinylidene fluoride-perfluoromethyl vinyl ether-tetrafluoroethylene-based fluorine rubber (VDF-PFMVE-TFE-based fluorine rubber), and vinylidene fluoride-chlorotrifluoroethylene-based fluorine rubber (VDF-CTFE-based fluorine rubber). Still other examples of the binder include cellulose, styrene-butadiene rubber, ethylene-propylene rubber, a polyimide resin, a polyamideimide resin, and an acrylic resin.

(Separator 20)

The separator 20 has electrical insulating properties and a porous structure. An example of the separator 20 is a microporous resin film. Examples of the resin include a polyimide-based resin, and polyolefin-based resins such as polyethylene and polypropylene. The resin may be a homopolymer, a copolymer, or a mixture of a plurality of polymers. The microporous resin film can be produced by stretching the resin film (dry method) or removing a pore-forming agent or the like in the resin film (wet method).
Another example of the separator 20 is a nonwoven fabric (paper) of various fibers. Examples of the fiber include a fiber of each of the above resins, a cellulose fiber, a polyester fiber, a polyamide fiber, a polyacrylonitrile fiber, and a glass fiber.
Still another example of the separator 20 is a solid electrolyte. Examples of the solid electrolyte include a polymer solid electrolyte, an oxide-based solid electrolyte, and a sulfide-based solid electrolyte.

The separator 20 may be a single layer of the above material, or may be a laminate of any two or more of the above materials. The separator 20 may further include a layer including a material other than the above materials on one principal surface or both principal surfaces thereof. Such a material may be an inorganic material or an organic material. Examples of the inorganic material include metal oxides such as alumina, silica, zirconia, and titania, and solid electrolytes such as lithium ion conductors (LISICON, LLZ, LLTO).

(Nonaqueous Electrolytic Solution)

The nonaqueous electrolytic solution is sealed in an outer case 50 and impregnated in the power generating element 90. The nonaqueous electrolytic solution includes, for example, a nonaqueous solvent and an electrolyte. The electrolyte is dissolved in the nonaqueous solvent.

The nonaqueous solvent includes, for example, cyclic carbonate and chain carbonate. The cyclic carbonate solvates the electrolyte. Examples of the cyclic carbonate include ethylene carbonate, propylene carbonate, and butylene carbonate. The cyclic carbonate preferably includes at least propylene carbonate. The chain carbonate reduces viscosity of the cyclic carbonate. The chain carbonate is, for example, diethyl carbonate, dimethyl carbonate, or ethyl methyl carbonate. The nonaqueous solvent may further include methyl acetate, ethyl acetate, methyl propionate, ethyl propionate, propyl propionate, $\gamma$-butyrolactone, 1,2-dimethoxyethane, 1,2-diethoxyethane, and the like.

The electrolyte is, for example, a lithium salt. Examples of the electrolyte include $LiPF_6$, $LiClO_4$, $LiBF_4$, $LiCF_3SO_3$, $LiCF_3CF_2SO_3$, $LiC(CF_3SO_2)_3$, $LiN(FSO_2)_2$, $LiN(CF_3SO_2)_2$, $LiN(CF_3CF_2SO_2)_2$, $LiN(CF_3SO_2)(C_4F_9SO_2)$, $LiN(CF_3CF_2CO)_2$, LiBOB. The lithium salt may be used singly or in combination of two or more kinds thereof.

(Outer Case 50)

The outer case 50 hermetically seals the power generating element 90 and the nonaqueous electrolytic solution therein. The outer case 50 prevents leakage of the nonaqueous electrolytic solution to the outside, intrusion of moisture or the like into the lithium secondary battery 100 from the outside, and the like.

Although not illustrated, the outer case 50 may have a metal foil and a resin layer laminated on opposite surfaces of the metal foil.

As the metal foil, for example, an aluminum foil can be used. As the resin layer, a polymer film of polypropylene or the like can be used. The material constituting the resin layer may be different between the inside and the outside. For example, a polymer having a high melting point, for example, polyethylene terephthalate (PET), polyamide (PA), or the like can be used as the outer material, and polyethylene (PE), polypropylene (PP), or the like can be used as the material of the inner polymer film.

Although not illustrated, usually, leads connected to the positive electrode and the tab part of the negative electrode communicate the inside and the outside of the outer case. The lead may be formed of a conductive material such as aluminum, nickel, or a metal plate formed by plating copper with nickel. In particular, it is preferable to use an aluminum metal plate for the lead connected to the positive electrode 10 side, and it is preferable to use a nickel metal plate or a metal plate in which copper is plated with nickel for the lead connected to the negative electrode 30C side.

Although in the present embodiment, opposite outermost layers of the power generating element 90 are the negative electrodes 30C, the present disclosure is not limited thereto, and for example, opposite outermost layers of the power generating element 90 may be positive electrodes.

The number of laminated positive electrodes (or negative electrodes) is not particularly limited, and may be, for example, one layer or a multilayer of ten layers, 20 layers, or the like.

[Method for Producing Lithium Secondary Battery]

The lithium secondary battery according to the present embodiment includes the following steps (a) and (b), and the step (b) is performed twice or more.

(a) A step of preparing a lithium secondary battery precursor including a negative electrode having a current collector layer and a lithium metal foil, and a positive electrode.
(b) A step of charging the lithium secondary battery precursor at 0.01 to 0.5C until a state of charge reaches 10 to 100%, and then discharging the lithium secondary battery precursor at 0.2C to 2.5C.

(Step (a))

The lithium secondary battery precursor includes the negative electrode, the positive electrode, and the separator disposed between the negative electrode and the positive electrode. These are impregnated with a nonaqueous electrolytic solution. As the current collector layer and the lithium metal foil of the negative electrode, the positive electrode, and the separator, the same ones as those of the lithium secondary battery 100 according to the above embodiment can be used.

(Step (b))

The second lithium metal layer and the third lithium metal layer according to the above embodiment are formed by performing the step (b) twice or more.

Examples

In the following, the present disclosure will be described based on Examples and Comparative Examples. Note that the present disclosure is not limited to the following Examples.

[Production of Lithium Secondary Battery]

(Example 1)

A copper foil having a thickness of 8 $\mu$m was prepared as a current collector layer. A lithium metal foil having a thickness of 20 $\mu$m was disposed on one principal surface of the current collector layer and then cut into a predetermined shape to obtain a first laminate having a main body part and a tab.

A positive electrode slurry was applied to one surface of an aluminum foil having a thickness of 15 $\mu$m, and cut into a predetermined shape having a main body part and a tab part similar to those of a negative electrode. The positive electrode slurry was produced by mixing a positive electrode active material, a conductive auxiliary agent, a binder, and a solvent.

$LiNi_xCo_yMn_zM_aO_2$ (x = 0.83, y = 0.09, z = 0.07, a = 0.01, M = Al), which is one of composite metal oxides, was used as the positive electrode active material. Carbon black was used as the conductive auxiliary agent. Polyvinylidene fluoride (PVDF) was used as the binder. A mass ratio of the positive electrode active material, the conductive auxiliary agent, and the binder was set to 95:2:3. A supported amount of the positive electrode active material in a dried positive electrode active material layer was set to 10 mg/cm$^2$. The solvent was removed from the positive electrode slurry in a drying furnace to produce a positive electrode.

The produced first laminate and positive electrode were alternately laminated with a polypropylene separator having a thickness of 10 $\mu$m interposed therebetween, and 11 sheets of the first laminate and ten sheets of the positive electrode were laminated to produce a second laminate. Opposite outermost electrodes were set to be the first laminates. Furthermore, a negative electrode lead made of nickel was attached to the tab part of the first laminate in the second laminate, and a positive electrode lead made of aluminum was attached to the tab part of the positive electrode in the second laminate by an ultrasonic welding machine.

Then, the second laminate was inserted into a case and heat-sealed except for one place around the second laminate to form a closed portion. Thereafter, a nonaqueous electrolytic solution was injected into the case. The nonaqueous electrolytic solution was prepared by adding 4M(mol/L) of $LiN(FSO_2)_2$ as a lithium salt to a 1,2-dimethoxyethane solvent. Then, the remaining one place was hermetically sealed by heat sealing while being decompressed by a vacuum sealing machine to produce a lithium secondary battery precursor.

Next, using a secondary battery charge-discharge test device (manufactured by Hokuto Denko Corporation), a charge-discharge cycle in which the lithium secondary battery precursor was charged and discharged was performed in an environment at 25°C for two cycles. Thus, a lithium secondary battery was obtained. Charging was performed at a C rate shown in Table 1 by a constant current charging method until a state of charge (SOC) reached the value shown in Table 1. Discharging was performed by constant current discharge at the C rate shown in Table 1 until a cell voltage reached 3.0 V. A negative electrode of the obtained lithium secondary battery has a structure of a current collector layer/an Li metal foil (a first lithium metal layer)/a second lithium metal layer including granular lithium metal/a third lithium metal layer including lithium metal and being porous.

(Examples 2 to 10 and Comparative Examples 2 and 3)

Except that a C rate during charging, a state of charge, and a C rate during discharging were set to the values shown in Table 1 in a charge-discharge cycle, a lithium secondary battery was obtained in the same manner as in Example 1. A negative electrode of the obtained lithium secondary battery has a structure of a current collector layer/an Li metal foil (a first lithium metal layer)/a second lithium metal layer including granular lithium metal/a third lithium metal layer including lithium metal and being porous.

(Comparative Example 1)

A lithium secondary battery was obtained in the same manner as in Example 1 except that the number of executions of the charge-discharge cycles was one. A negative electrode of the obtained lithium secondary battery has a structure of a current collector layer/an Li metal foil (a first lithium metal layer)/a third lithium metal layer including lithium metal and being porous/a second lithium metal layer including granular lithium metal.

[Evaluation]

<Examples 1 to 10 and Comparative Examples 1 to 3>

(Cycle Characteristics)

The capacity retention rate of the lithium secondary battery after cycling was measured using a secondary battery charge-discharge test device (manufactured by Hokuto Denko Corporation). A charge-discharge cycle in which constant current and constant voltage charging was performed at 0.2C to 4.3 V and constant current discharging was performed at 1C to 3.0 V in an environment of 25°C was set as one charge-discharge cycle, and the number of cycles required to be decreased to 80% or less of an initial capacity was measured. The results are shown in Table 1.

(Change in Thickness of Negative Electrode)

The lithium secondary battery after 100 cycles was disassembled, and a thickness change of the negative electrode was measured. A thickness change rate was obtained by ("thickness of negative electrode after 100 cycles" - "thickness of negative electrode before first charge")/("thickness of negative electrode before first charge") ×100. The results are shown in Table 1.

(Average Pore Diameter of Third Lithium Metal Layer)

A principal surface of the third lithium metal layer of the negative electrode of the lithium secondary battery was observed with a scanning electron microscope (trade name "SU8010" manufactured by Hitachi High-Technologies Corporation) (magnification: 2000 times) to capture an image. The obtained image was binarized based on a color tone, thereby discriminating between pores and other than the pores in the third lithium metal layer. The pores in the image were extracted, all the pore diameters were measured, and an average value thereof was adopted as the average pore diameter. The results are shown in Table 1.

(Porosity of Third Lithium Metal Layer)

A principal surface of the third lithium metal layer of the negative electrode of the lithium secondary battery was observed with a scanning electron microscope (trade name "SU8010" manufactured by Hitachi High-Technologies Corporation) (magnification: 2000 times) to capture an image. The obtained image was binarized based on a luminance, thereby discriminating between pores and other than the pores in the third lithium metal layer. The porosity was measured from the binarized image. The results are shown in Table 1.

(Average Particle Diameter of Second Lithium Metal Layer)

A cross section of the second lithium metal layer of the negative electrode of the lithium secondary battery was observed with the scanning electron microscope (trade name "SU8010" manufactured by Hitachi High-Technologies Corporation) (magnification: 5000 times) to capture an image. The obtained image was binarized based on a luminance, thereby discriminating particles of the second lithium metal layer. All particle diameters in the image were measured, and an average value thereof was adopted as the average particle diameter. The results are shown in Table 1.

(Area Percentage S)

The principal surface of the negative electrode of the lithium secondary battery on the third lithium metal layer side was observed with the scanning electron microscope (trade name "SU8010" manufactured by Hitachi High-Technologies Corporation) (magnification: 500 times) to capture an image. The obtained image was binarized based on a luminance, thereby discriminating between the second lithium metal layer and the third lithium metal layer. From the binarized image, an area S2 of the second lithium metal layer when the principal surface was observed in plan view and an area S3 of the third lithium metal layer when the principal surface was observed in plan view were obtained. From S2 and S3, an area percentage S obtained by the following Formula (1) was calculated. The results are shown in Table 1.

$$\text{Area percentage } S = \{S3/(S2 + S3)\} \times 100 \cdots \text{ Formula (1)}$$

[In Formula (1), S2 is an area of the second lithium metal layer on a principal surface of the negative electrode of the lithium secondary battery on a third lithium metal layer side, and S3 is an area of the third lithium metal layer on the principal surface of the negative electrode of the lithium secondary battery on the third lithium metal layer side.]

[Table 1]

| | charge rate | SOC | discharge rate | average pore diameter of third lithium metal layer [μm] | average particle diameter of second lithium metal layer [μm] | porosity of third lithium metal layer [%] | cycle characteristics [number of times] | area percentage S [area %] | thickness change rate [%] |
|---|---|---|---|---|---|---|---|---|---|
| Example 1 | C/50 | 100 | 1C | 0.8 | 15 | 25 | 633 | 85 | 107 |
| Example 2 | C/50 | 10 | 1C | 0.8 | 1 | 17 | 527 | 70 | 113 |
| Example 3 | C/50 | 50 | 1C | 0.8 | 8 | 20 | 582 | 75 | 110 |
| Example 4 | C/3 | 100 | 1C | 3 | 15 | 29 | 510 | 80 | 114 |
| Example 5 | C/100 | 100 | C/2 | 0.09 | 15 | 19 | 411 | 75 | 129 |
| Example 6 | C/2 | 100 | 1C | 4.3 | 15 | 33 | 428 | 70 | 122 |
| Example 7 | C/50 | 100 | C/3 | 0.8 | 8 | 9 | 439 | 70 | 126 |
| Example 8 | C/50 | 100 | 2.5C | 0.8 | 22 | 43 | 424 | 60 | 123 |
| Example 9 | C/100 | 100 | C/5 | 0.09 | 13 | 9 | 398 | 65 | 128 |
| Example 10 | C/2 | 100 | 2C | 3.2 | 17 | 43 | 376 | 70 | 131 |
| Comparative Example 1 | C/50 | 100 | 1C | 0.8 | 1 | 25 | 221 | 55 | 156 |
| Comparative Example 2 | C/4 | 100 | C/30 | 0.8 | 0.6 | 23 | 198 | 65 | 160 |
| Comparative Example 3 | C/3 | 100 | C/30 | 2 | 1.3 | 33 | 141 | 55 | 199 |

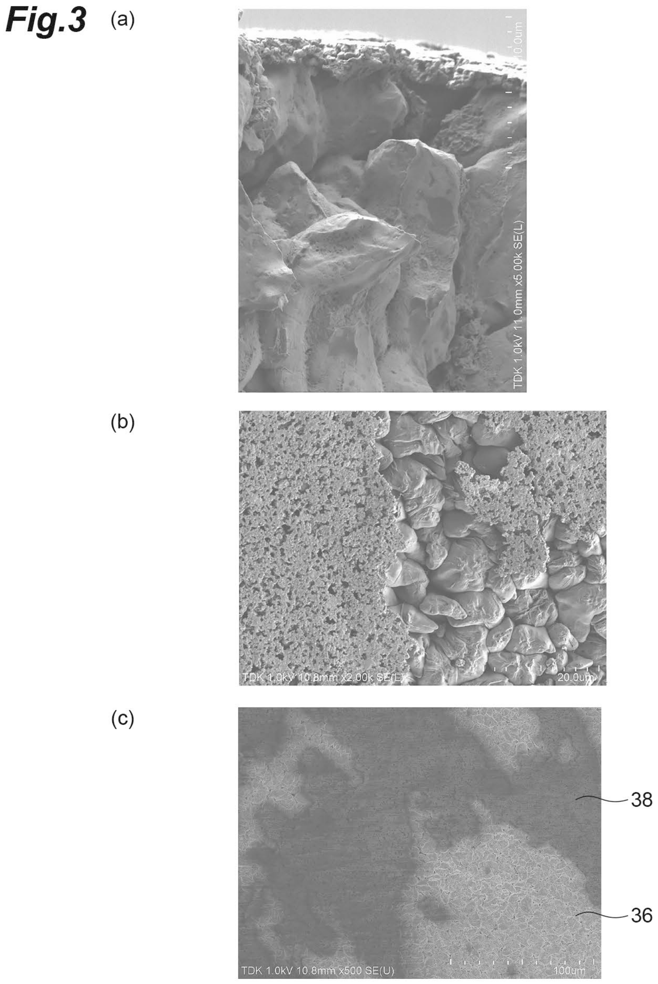

FIG. 3(a) is an SEM photograph (magnification: 5000 times) obtained by photographing a part of the cross section of the negative electrode of the lithium secondary battery obtained in Example. It can be seen that the second lithium metal layer including granular lithium metal and the porous third lithium metal layer are formed. FIG. 3(b) is an SEM photograph (magnification: 2000 times) obtained by photographing the principal surface of the negative electrode of the lithium secondary battery on the third lithium metal layer side obtained in Example. It can be seen that the second lithium metal layer including granular lithium metal and the porous third lithium metal layer are formed. FIG. 3(c) is an SEM photograph (magnification: 500 times) obtained by photographing the principal surface of the negative electrode of the lithium secondary battery on the third lithium metal layer side obtained in Example. It can be seen that a second lithium metal layer 36 and a third lithium metal layer 38 are present.

**Reference Signs List**

| 10 | positive electrode |
|---|---|
| 30C | negative electrode |
| 32 | current collector layer |
| 34, 36, 38 | lithium metal layer |
| 36a | granular lithium metal |
| 100 | lithium secondary battery |

**Claims**

1. A lithium secondary battery comprising:

    a negative electrode; and a positive electrode, wherein
    the negative electrode has: in the following order,
    a current collector layer;
    a first lithium metal layer made of a lithium metal foil;
    a second lithium metal layer including granular lithium metal; and
    a third lithium metal layer including lithium metal and being porous,
    the granular lithium metal having an average particle diameter larger than an average pore diameter of the third lithium metal layer.

2. The lithium secondary battery according to claim 1, wherein the third lithium metal layer has a porosity of 10 to 40%.

3. The lithium secondary battery according to claim 1 or 2, wherein the third lithium metal layer has an average pore diameter of 0.1 to 3 $\mu$m.

4. The lithium secondary battery according to any one of claims 1 to 3, wherein the granular lithium metal has an average particle diameter of 1 to 22 $\mu$m.

5. The lithium secondary battery according to any one of claims 1 to 4, wherein an area percentage S obtained by the following Formula (1) is 60 area% or more:

$$\text{Area percentage S} = \{S3/(S2 + S3)\} \times 100 \cdots \text{Formula (1)}$$

    [In Formula (1), S2 is an area of the second lithium metal layer on a principal surface of the negative electrode on a third lithium metal layer side, and S3 is an area of the third lithium metal layer on the principal surface of the negative electrode on the third lithium metal layer side.]

6. A method for producing a lithium secondary battery, comprising:

    (a) a step of preparing a lithium secondary battery precursor including a negative electrode having a current collector layer and a lithium metal foil, and a positive electrode; and
    (b) a step of charging the lithium secondary battery precursor at 0.01 to 0.5C until a state of charge reaches 10 to 100%, and then discharging the lithium secondary battery precursor at 0.2C to 2.5C, wherein the step (b) is performed twice or more.

# Fig.1

**Fig.2**

*Fig.3* (a)

(b)

(c)

— 38

— 36

## INTERNATIONAL SEARCH REPORT

International application No.

**PCT/JP2024/007824**

| A. | CLASSIFICATION OF SUBJECT MATTER |
|---|---|

*H01M 4/134*(2010.01)i; *H01M 4/38*(2006.01)i; *H01M 10/052*(2010.01)i; *H01M 10/058*(2010.01)i
FI:   H01M4/134; H01M4/38 Z; H01M10/052; H01M10/058

According to International Patent Classification (IPC) or to both national classification and IPC

| B. | FIELDS SEARCHED |
|---|---|

Minimum documentation searched (classification system followed by classification symbols)

H01M4/134; H01M4/38; H01M10/052; H01M10/058

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2021-521600 A (LG CHEM, LTD.) 26 August 2021 (2021-08-26)<br>example 2 | 6 |
| A | example 2 | 1-5 |
| A | WO 2022/085984 A1 (LG ENERGY SOLUTION, LTD.) 28 April 2022 (2022-04-28)<br>paragraph [6] | 1-6 |
| A | JP 2014-239047 A (SION POWER CORP.) 18 December 2014 (2014-12-18) | 1-6 |

☐ Further documents are listed in the continuation of Box C.      ☑ See patent family annex.

| | |
|---|---|
| *    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **07 May 2024** | **21 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/007824**

| Patent document cited in search report | | | Publication date (day/month/year) | Patent family member(s) | | | Publication date (day/month/year) |
|---|---|---|---|---|---|---|---|
| JP | 2021-521600 | A | 26 August 2021 | US | 2021/0242463 | A1 | |
| | | | | example 2 | | | |
| | | | | WO | 2020/009333 | A1 | |
| | | | | EP | 3783704 | A1 | |
| | | | | KR | 10-2020-0003575 | A | |
| | | | | CN | 112189269 | A | |
| WO | 2022/085984 | A1 | 28 April 2022 | US | 2023/0163270 | A1 | |
| | | | | paragraph [0005] | | | |
| | | | | EP | 4131483 | A1 | |
| | | | | KR | 10-2022-0052213 | A | |
| | | | | CN | 115606017 | A | |
| | | | | JP | 2023-522385 | A | |
| JP | 2014-239047 | A | 18 December 2014 | US | 2010/0035128 | A1 | |
| | | | | WO | 2010/016881 | A1 | |
| | | | | EP | 2324526 | A1 | |
| | | | | CN | 102144324 | A | |
| | | | | KR | 10-2011-0052594 | A | |

Form PCT/ISA/210 (patent family annex) (July 2022)

**EP 4 685 863 A1**

**Patent documents cited in the description**

- JP H11214008 A
- JP 2000133314 A
- JP 5317435 B